# EUROPÄISCHE PATENTSCHRIFT

(11) **EP 3 891 418 B1**
(45) Veröffentlichungstag und Bekanntmachung des Hinweises auf die Patenterteilung: **27.04.2022**
(21) Anmeldenummer: 20706956.8
(22) Anmeldetag: 11.02.2020
(51) Int. Cl.: F16H 55/16, F16H 55/06

(54) **GETRIEBEELEMENT UND VERFAHREN ZUR FERTIGUNG EINES GETRIEBEELEMENTS**
TRANSMISSION ELEMENT AND METHOD FOR PRODUCING SAME
ÉLÉMENT DE TRANSMISSION ET PROCÉDÉ DE FABRICATION D'UN ÉLÉMENT DE TRANSMISSION

(30) Priorität: 12.02.2019 EP 19156632
(43) Veröffentlichungstag der Anmeldung: 13.10.2021
(73) Patentinhaber: Flender GmbH, 46395 Bocholt (DE)
(72) Erfinder: KAMPS, Tobias, 80538 München (DE)
(74) Vertreter: Michalski Hüttermann & Partner Patentanwälte mbB
(86) Internationale Anmeldenummer: PCT/EP2020/053401
(87) Internationale Veröffentlichungsnummer: WO 2020/165129

(56) Entgegenhaltungen:
- DE-A1-102015 005 133
- US-A- 3 636 792
- US-A1- 2012 132 024

## Beschreibung

Die Erfindung betrifft ein Getriebeelement sowie ein Verfahren zur Fertigung eines Getriebeelements und eine, insbesondere elektrische, Maschine sowie ein Getriebe und eine Turbine.

Getriebeelemente wie insbesondere Zahnräder und Zahnstangen unterliegen hohen Anforderungen sowohl hinsichtlich ihrer Oberflächenhärte als auch der Duktilität ihres Materials im Inneren. Einerseits muss die Oberflächenhärte für den Betrieb eines Getriebeelements hinreichend hoch sein. Zugleich müssen solche Getriebeelemente in ihrem Inneren, also ihrem Kern, eine hinreichend hohe Duktilität aufweisen, um dynamische Kräfte auf das Getriebeelement kompensieren zu können. Gleichzeitig ist es von Vorteil, wenn die Oberfläche des Getriebeelementes Druckeigenspannungen aufweist. Solche Anforderungen bestehen insbesondere bei Getriebeelementen von Turbinen und, insbesondere elektrischen, Maschinen.

Es ist bekannt, Verzahnungen von Getriebeleementen aus Einsatzstahl herzustellen und einen im Übrigen geringen Kohlenstoffgehalt des Werkstoffs durch oberflächliche Aufkohlung zu vergrößern. Anschließend kann das Getriebeelement gehärtet werden, sodass das Getriebeelement eine oberflächlich besonders harte Verzahnung aufweist und im Übrigen hinreichend weich, d.h. duktil, ausgebildet ist. Die Prozesskette zur Oberflächenhärtung ist jedoch zeitintensiv, kostenintensiv, energieaufwändig und beeinträchtigt die Umwelt aufgrund der Verwendung von Prozessgasen.

Alternativ ist es möglich, unter Verwendung von Einsatzstählen eine komplexe chemische Werkstoffanpassung und eine Wärmebehandlung vorzunehmen oder aber Getriebeelemente oberflächlich zu nitrieren oder einer Randschichthärtung mittels Lasern oder Induktion zu unterziehen. Diese Alternativen sind jedoch hinsichtlich ihrer Materialeigenschaften wie insbesondere ihrer Oberflächenhärte oder ihres Härtetiefenverlaufs beschränkt, sodass solche Getriebeeelemente nicht für hohe Festigkeitsansprüche umfassend einsetzbar sind.

Eine weitere Alternative ist beispielsweise aus der US 2012/0132024 A1 bekannt, in der ein mit Zähnen gezahntes Getriebeelement offenbart wird, bei dem ein Ansatz verfolgt, bei dem Vibrationen reduziert werden sollen. Hierfür wird ein Schichtdesign offenbart, bei dem die mittlere Schicht eine niedrigere Härte als die umgebenden Schichten aufweist. Bei diesem Aufbau wird jedoch keine mechanische Pufferfunktion durch unterschiedliche Materialeigenschaften realisiert.

Es ist daher Aufgabe der Erfindung, ein Getriebeelement anzugeben, welches hinsichlich seiner Materialeigenschaften zuverlässig in Turbinen und/oder Maschinen einsetzbar ist und welches zugleich kostengünstig und vergleichsweise einfach herstellbar ist. Ferner ist es Aufgabe der Erfindung, ein Verfahren zur Fertigung eines solchen Getriebeelements anzugeben, welches zuverlässig und unaufwendig durchgeführt werden kann. Zusätzlich ist es Aufgabe der Erfindung, eine Maschine und eine Turbine anzugeben, welche ein solches Getriebeelement aufweisen.

Diese Aufgabe der Erfindung wird mit einem Getriebeelement mit den in Anspruch 1 angegebenen Merkmalen und mit einem Verfahren mit den in Anspruch 11 angegebenen Merkmalen sowie mit einem Getriebe mit den in Anspruch 12 angegebenen Merkmalen und mit einer Maschine mit den in Anspruch 13 angegebenen Merkmalen sowie mit einer Turbine mit den in Anspruch 14 angegebenen Merkmalen gelöst. Bevorzugte Weiterbildungen der Erfindung sind in den zugehörigen Unteransprüchen, der nachfolgenden Beschreibung und der Zeichnung angegeben.

Das erfindungsgemäße Getriebeelement ist mit Zähnen gezahnt und weist mindestens einen mit einem ersten Material gebildeten Teilbereich sowie mindestens einen mit einem zweiten Material additiv gebildeten Randbereich auf. Bei dem erfindungsgemäßen Getriebeelement weist das zweite Material eine größere Härte auf als das erste Material.

Das erfindungsgemäße Getriebeelement ist mit mehr als zwei Materialien gebildet, wobei die weiteren Materialien zweckmäßig einen gestuften Anstieg der Härte von erstem bis hin zum zweiten Material realisieren, welche weiteren Materialien zwischen erstem und zweitem Material befindlich sind.

Vorteilhaft weist das erfindungsgemäße Getriebeelement aufgrund der unaufwendig erzielbaren Oberflächenhärte des Randbereichs eine erheblich vergrößerte Einsatzzeit auf. Damit ist das erfindungsgemäße Getriebeelement mit deutlich verringerten Wartungskosten und/oder Reparaturkosten einsetzbar. Zugleich ist der erste Teilbereich mit hinreichend duktilem Material ausbildbar, sodass der erste Teilbereich eine mechanische Pufferfunktion übernehmen kann, um dynamische Kräfte auf das Getriebeelement zu kompensieren.

Insbesondere weist das zweite Material des Getriebeelements infolge seiner Anbindung an das erste Material, insbesondere aufgrund der Abweichungen der Gefüge des ersten und des zweiten Materials, Druckeigenspannungen an einer Oberfläche des Randbereichs auf.

Geeignet ist das erfindungsgemäße Getriebeelement mittels Mehrachs- oder Robotersystemen unaufwendig mittels additiver Fertigung fertigbar. Erfindungsgemäß können die Materialeigenschaften gradiert ausgelegt werden, sodass das Getriebeelement in seinem Inneren aufgrund des ersten Materials eine hinreichend hohe Duktilität aufweist. Zugleich ist das erfindungsgemäße Getriebeelement aufgrund des zweiten Materials hinreichend hart, insbesondere sprödhart, ausbildbar. Die sprödharte-duktile Werkstoffkombination kann aufgrund der Fertigungsmethode insbesondere gradiert aufgebaut werden, sodass ein gradierter Härtetiefenverlauf oder ein Druckeigenspannungsgefälle eingestellt werden kann. Aufgrund der Ausbildung des Getriebeelements zumindest hinsichtlich des zweiten Materials als additives Werkstück kann eine Vielzahl von Werkstoffkombinationen realisiert werden. Insbesondere kann IN718 als erstes Material eingesetzt werden, sodass das Getriebeelement bezüglich des ersten Materials besonders warmfest und duktil ausgelegt sein kann. Als additives Werkstück kann das erfindungsgemäße Getriebeelement einen gradierten oder gestuften Übergang zu einem zweiten Material, insbesondere in ein oder mehrere Stellite und/oder Hartmetalle und/oder intermetallische Werkstoffe, aufweisen.

Als additives Werkstück kann das erfindungsgemäße Getriebeelement kostengünstig nahezu beliebig ausgebildete Sonderverzahnungen aufweisen.

Vorteilhaft kann das erfindungsgemäße Getriebeelement mittels des erfindungsgemäßen Verfahrens aufgrund der additiven Fertigung kostengünstig hergestellt werden. Insbesondere fallen deutlich reduzierte Werkzeugkosten an. Zudem sind erfindungsgemäß aufgrund der grundsätzlichen Verwendbarkeit von Robotern reduzierte Maschinenstundensätze erzielbar. Rüstzeiten sind erfindungsgemäß erheblich reduzierbar. Vorteilhaft weist das erfindungsgemäße Getriebeelement eine reduzierte Fertigungszeit, insbesondere gegenüber einer konventionellen Fertigung bei schwer zerspanbaren Materialien, auf.

Als zumindest hinsichtlich des zweiten Materials additives Werkstück ist das erfindungsgemäße Getriebeelement insbesondere auch in kleinen Losgrößen kostengünstig fertigbar.

Vorzugsweise beträgt bei dem erfindungsgemäßen Getriebeelement die Differenz der Vickers-Härte von zweitem Material und erstem Material mindestens 100 HV, vorzugsweise mindestens 200 HV und idealerweise mindestens 400 HV. Bevorzugt weist das zweite Material eine Vickers-Härte von zumindest 500 HV, vorzugsweise mindestens 600 HV und vorzugsweise zumindest 700 HV oder sogar zumindest 780 HV auf und/oder das erste Material weist eine Vickers-Härte von höchstens 400 HV und vorzugsweise höchstens 350 HV auf.

Vorteilhaft weist das erfindungsgemäße Getriebeelement aufgrund der einfach erzielbaren Oberflächenhärte eine erheblich vergrößerte Einsatzzeit auf. Damit ist das erfindungsgemäße Getriebeelement mit deutlich verringerten Wartungskosten und/oder Reparaturkosten einsetzbar. Zugleich ist das Material des ersten Teilbereiches in weiten Grenzen beliebig duktil ausbildbar.

Zweckmäßig weisen bei dem erfindungsgemäßen Getriebeelement zumindest ein oder mehrere, vorzugsweise sämtliche, der Zähne den mit dem zweiten Material additiv gebildeten Randbereich auf. Vorteilhaft sind sämtliche Zähne mit dem zweiten Material gebildet. Grundsätzlich lässt sich jedoch bereits eine robuste Auslegung des erfindungsgemäßen Getriebeelements auch dann erreichen, wenn lediglich jeder zweite oder jeder dritte oder jeder n-te Zahn mit dem zweiten Material gebildet ist.

Idealerweise weisen bei dem erfindungsgemäßen Getriebeelement ein oder mehrere, vorzugsweise sämtliche, der Zähne den mit dem zweiten Material additiv gebildeten Randbereich auf. Vorzugsweise wird das erfindungsgemäße Getriebeelement mittels eines oder mehrerer oder sämtlicher der weiteren Materialien additiv gebildet.

Vorzugsweise ist bei dem Getriebeelement gemäß der Erfindung zudem der Teilbereich additiv gebildet oder der Teilbereich ist alternativ und ebenfalls bevorzugt mittels Urformung, vorzugsweise Gießens, Umformens, vorzugsweise Schmiedens, Subtraktiv, insbesondere Zerspanens, gebildet.

Vorteilhaft ist in letztgenannter Weiterbildung des erfindungsgemäßen Getriebeelements ein konventionell aus dem ersten Material gefertigter Kern heranziehbar, sodass das erfindungsgemäße Getriebeelement besonders kostengünstig fertigbar ist.

Geeigneterweise weist bei dem erfindungsgemäßen Getriebeelement das erste Material eine höhere Duktilität als das zweite Material auf. Somit kann das erste Material und somit insbesondere der Teilbereich dynamische Kräfte auf das Getriebeelement kompensieren.

Das Getriebeelement gemäß der Erfindung ist zweckmäßig ein Zahnrad oder eine Zahnstange oder weist zweckmäßig ein Zahnrad oder eine Zahnstange auf.

Bei dem erfindungsgemäßen Getriebeelement nimmt die Härte entlang eines von einem Randbereich zum Teilbereich führenden Abschnitts gestuft und/oder kontinuierlich ab, vorzugsweise zumindest mittels des ersten und des zweiten Materials, vorzugsweise zudem mittels eines oder mehrerer weiterer Materialien.

Geeigneterweise ist bei dem erfindungsgemäßen Getriebeelement das erste Material mit oder aus Einsatzstahl und/oder einer Nickelbasislegierung gebildet.

Zweckmäßig ist bei dem erfindungsgemäßen Getriebelement das zweite Material mit oder aus Hartmetall, vorzgugsweise Wolframcarbid und/oder einer, vorzugsweise bei mindestens 250 Grad Celsius thermisch langzeitbeständigen, Nickelbasislegierung gebildet. Erfindungsgemäß ist in dieser Weiterbildung des erfindungsgemäßen Getriebeelements als additives Werkstück für das zweite Material ein hochwarmfestes und sprödhartes Material heranziehbar.

Bei dem erfindungsgemäßen Getriebeelement ist vorteilhaft zumindest das zweite Material mittels Laserauftragsschweißens, insbesondere Laserdrahtauftragsschweißens oder Laserpulverauftragsschweißens, und/oder mittels thermischen Spritzens und/oder mittels Kaltgasspritzens und/oder mittels Lichtbogenauftragsschweißens und/oder mittels eines Pulverbettverfahrens, insbesondere Laser Beam Melting und/oder Selective Laser Meltings und/oder Electron Beam Melting, gebildet. Mittels der vorstehenden additiven Fertigungsverfahren ist das zweite Material des Getriebeelements besonders einfach und kostengünstig druckbar.

Bei dem erfindungsgemäßen Verfahren zur Fertigung eines Getriebeleements wie vorstehend beschrieben wird zumindest das zweite Material zumindest im Randbereich mittels Laserauftragsschweißens, insbesondere Laserdrahtauftragsschweißens, und/oder thermischen Spritzens und/oder Kaltgasspritzens und/oder Lichtbogenauftragsschweißens und/oder eines Pulverbettverfahrens und/oder Selective Laser Meltings gebildet. Der erste Teilbereich kann grundsätzlich auf konventionelle Weise, d.h. urformend oder umformend oder zerspanend, mit dem ersten Material gebildet werden.

Grundsätzlich können bei dem erfindungsgemäßen Verfahren abschließend auch zusätzlich konventionelle und etablierte Hartfeinbearbeitungsschritte vorgenommen werden, sodass eine beliebig maßgenaue Fertigung erfindungsgemäß möglich ist.

Das erfindungsgemäße Getriebe weist mindestens ein erfindungsgemäßes Getriebeelement wie vorstehend beschrieben und/oder wie mit dem erfindungsgemäßen Verfahren gefertigt auf.

Die erfindungsgemäße Maschine ist insbesondere eine elektrische Maschine, vorzugsweise ein Generator und/oder ein Motor und/oder Elektromotor. Die erfindungsgemäße Maschine weist ein erfindungsgemäßes Getriebe wie vorstehend beschrieben auf.

Die erfindungsgemäße Turbine ist insbesondere eine Windkraftturbine und/oder eine Gasturbine und/oder eine Fluggasturbine. Die erfindungsgemäße Turbine weist ein erfindungsgemäßes Getriebe und/oder eine erfindungsgemäße Maschine wie vorstehend beschrieben auf.

Nachfolgend wird die Erfindung anhand eines in der Zeichnung dargestellten Ausführungsbeispiels näher erläutert.

Die einzige Zeichnungsfigur 1 zeigt ein erfindungsgemäßes Getriebeelement in Gestalt eines Zahnrades schematisch in einer Prinzipskizze im Querschnitt.

Das in der Zeichnung dargestellte erfindungsgemäße Getriebeleelement in Gestalt eines Zahnrades 10 ist Bestandteil einer erfindungsgemäßen elektrischen Maschine 20 in Form eines Generators einer erfindungsgemäßen Windkraftturbine 30. In weiteren, nicht eigens dargestellten Ausführungsbeispielen ist das Zahnrad 10 Bestandteil eines Getriebes einer Gasturbine oder einer Fluggasturbine oder eines Motors und entspricht im Übrigen dem dargestellten Ausführungsbeispiel.

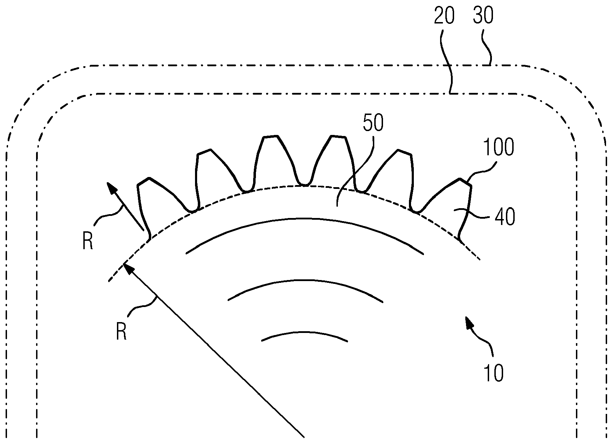

Das Zahnrad 10 ist in Zeichenebene der Fig. 1, d.h. um eine senkrecht auf der Zeichenebene stehende Drehachse (nicht explizit gezeigt), drehbeweglich. Wie in Fig. 1 dargestellt ist das Zahnrad 10 mit außenumfänglich um diese Drehachse herum angeordneten Zähnen 40 gezahnt. Die Zähne 40 strecken sich von einem im Wesentlichen kreisrunden Zahnradkern 50 radial, das heißt in radialer Richtung R, nach außen fort.

Das Zahnrad 10 ist erfindungsgemäß wie folgt gebildet: Zunächst wird der kreisrunde Zahnrandkern 50 mittels Urformung, im dargestellten Ausführungsbeispiel mittels Gießens, hergestellt. Dazu wird im gezeigten Ausführungsbeispiel eine Nickelbasislegierung herangezogen. Alternativ kann in weiteren, nicht eigens dargestellten Ausführungsbeispielen der Zahnradkern 50 mittels Umformung, beispielsweise von Einsatzstahl, oder mittels einer subtraktiven Fertigung, etwa mittels Zerspanung eines Blocks aus einer Nickelbasislegierung, gefertigt werden. Der Zahnradkern 50 bildet einen ersten Teilbereich des Zahnrades 10, welcher mit einem ersten Material, im dargestellten Ausführungsbeispiel einer Nickelbasislegierung, gebildet ist.

An den Zahnradkern 50 werden Zähne 40 mittels eines additiven Fertigungsverfahrens angeformt, im gezeigten Ausführungsbeispiel mittels additiver Fertigung aufgebracht. Dazu werden die Zähne 40 mittels Laserauftragsschweißens aus dem Hartmetall, im gezeigten Ausführungsbeispiel Wolframcarbid, an den Zahnradkern 50 angedruckt.

Im dargestellten Ausführungsbeispiel bilden die Zähne 40 einen Randbereich, der mit einem zweiten Material, hier wie beschrieben Wolframcarbid, gebildet ist.

Das zweite Material weist erfindungsgemäß eine Vickers-Härte auf, welche sich um mehr als 500 Härtegrade von der Vickers-Härte des ersten Materials unterscheidet. Dabei unterliegt das zweite Material an dem ersten Material zudem Druckeigenspannungen, welche das zweite Material besonders robust gegenüber mechanischen Beanspruchungen werden lässt.

In weiteren, nicht eigens dargestellten Ausführungsbeispielen kann das zweite Material mittels Laserdrahtauftragsschweißens oder thermischen Spritzens oder Lichtbogenauftragschweißens oder mittels eines Pulverbettverfahrens, insbesondere Laser Beam Meltings und/oder Electron Beam Meltings, angedruckt werden. Im dargestellten Ausführungsbeispiel beträgt die Vickers-Härte des zweiten Materials mehr als 800 HV, die Vickers-Härte des ersten Materials weniger als 300 HV.

In weiteren, nicht eigens dargestellten Ausführungsbeispielen bilden die Zähne 40 nicht in ihrer Gesamtheit den Randbereich aus, sondern lediglich ein radial äußerer Bereich der Zähne 40 bildet den Randbereich aus. Der innenliegende Teil der Zähne 40 ist Teil des Zahnradkerns 50, an welchem der äußere Bereich angedruckt ist.

In weiteren, nicht eigens dargestellten Ausführungsbeispielen kommen nicht lediglich zwei Materialien mit voneinander abweichenden Vickers-Härten zum Einsatz, sondern es kommen drei oder mehr Materialien zum Einsatz, deren voneinander abweichende Vickershärten in Richtung zum gezahnten Rand 100 des Zahnrades 10 hin, also in radialer Richtung R, zunehmen.

Dazu kann beispielsweise eine Nickelbasislegierung herangezogen werden, deren Legierungsbestandteile bereichsweise derart geändert werden, dass die Vickers-Härte der jeweiligen Bereiche mit zunehmender Nähe zum gezahnten Rand des Zahnrades 10 hin, also in radialer Richtung R, zunimmt.

In weiteren Ausführungsbeispielen ist der Randbereich nicht oder nicht nur mit oder an außenumfänglich angeordneten Zähnen 40 gebildet, sondern mit oder an innenumfänglich angeordneten Zähnen. Anstelle eines Zahnrades 10 kann in weiteren nicht gesondert dargestellten Ausführungsbeispielen als erfindungsgemäßes Getriebeelement eine Zahnstange vorhanden sein, wobei der Randbereich mit oder an einem gezahnten Rand der Zahnstange gebildet ist.

Es versteht sich, dass in den vorgenannten Ausführungsbeispielen der Randbereich nicht notwendigerweise an oder mit sämtlichen Zähnen 40 gebildet sein muss. Vielmehr kann der Randbereich auch beispielsweise an oder mit jedem zweiten oder dritten oder n-ten Zahn 40 gebildet sein.

## Patentansprüche

1. Mit Zähnen (40) gezahntes Getriebeelement (10), welches mindestens einen mit einem ersten Material gebildeten Teilbereich (50) sowie mindestens einen mit einem zweiten Material additiv gebildeten Randbereich aufweist, bei welchem das zweite Material eine größere Härte als das erste Material aufweist, **dadurch gekennzeichnet, dass** sich zumindest ein weiteres Material zwischen erstem und zweitem Material befindet und die Härte entlang eines von einem Rand zum Teilbereich führenden Abschnitts gestuft abnimmt.

2. Getriebeelement nach Anspruch 1, bei welchem Differenz der Vickers-Härte von zweiten Material und ersten Material mindestens 100, vorzugsweise mindestens 200, idealerweise mindestens 400, Härtegrande beträgt und insbesondere das zweite Material eine Vickers-Härte von zumindest 500, vorzugsweise mindestens 600, vorzugsweise zumindest 780 HV, und/oder das erste Material eine Vickers-Härte von höchstens 400 HV, vorzugsweise höchstens 350 HV, aufweist.

3. Getriebeelement nach einem der vorhergehenden Ansprüche, bei welchem zumindest ein oder mehrere, vorzugsweise sämtliche, der Zähne (40) den mit dem zweiten Material additiv gebildeten Randbereich aufweisen.

4. Getriebeelement nach einem der vorhergehenden Ansprüche, bei welchem zudem der Teilbereich (50) additiv gebildet ist oder der Teilbereich mittels Urformung, vorzugsweise Gießens, Umformens, vorzugsweise Schmiedens, Subtraktiv, insbesondere Zerspanens, gebildet ist.

5. Getriebeelement nach einem der vorhergehenden Ansprüche, bei welchem das erste Material eine höhere Duktilität als das zweite Material oder das zweite Material größere Druckeigenspannungen als das erste Material aufweist.

6. Getriebeelement nach einem der vorhergehenden Ansprüche, welches ein Zahnrad oder eine Zahnstange ist oder aufweist.

7. Getriebeelement nach einem der vorstehenden Ansprüche, wobei das zumindest eine weitere Material, zwischen erstem und zweitem Material, additiv gebildet ist.

8. Getriebeelement nach einem der vorhergehenden Ansprüche, bei welchem das erste Material mit oder aus Einsatzstahl und/oder Nickelbasislegierung gebildet ist.

9. Getriebeelement nach einem der vorhergehenden Ansprüche, bei welchem das zweite Material mit oder aus Hartmetall, vorzugsweise Wolframcarbid und/oder einer, vorzugsweise bei mindestens 250 Grad Celsius thermisch langzeitbeständigen, Nickelbasislegierung gebildet ist.

10. Getriebeelement nach einem der vorhergehenden Ansprüche, bei welchem zumindest das zweite Material mittels Laserauftragsschweißens, insbesondere Laserdrahtauftragsschweißens oder Laserpulverauftragsschweißens, oder thermischen Spritzens oder Kaltgasspritzens oder Lichtbogenauftragsschweißens oder mittels eines Pulverbettverfahrens, insbesondere Laser Beam Melting oder Selective Laser Meltings oder Electron Beam Melting, gebildet ist.

11. Verfahren zur Fertigung eines Getriebelements nach einem der vorhergehenden Ansprüche, bei welchem zumindest das zweite Material mittels Laserauftragsschweißens, insbesondere Laserdrahtauftragsschweißens, oder thermischen Spritzens oder Lichtbogenauftragsschweißens oder eines Pulverbettverfahrens oder Selective Laser Meltings gebildet wird.

12. Getriebe mit mindestens einem Getriebeelement nach einem der vorhergehenden Ansprüche 1 bis 10.

13. Maschine, insbesondere elektrische Maschine (20), vorzugsweise Generator und/oder Motor und/oder Elektromotor, mit einem Getriebe nach Anspruch 12.

14. Turbine, insbesondere Windkraftturbine (30) oder Gasturbine oder Fluggasturbine, mit einem Getriebe nach Anspruch 12 und/oder einer elektrischen Maschine nach Anspruch 13.

## Claims

1. Transmission element (10), which is toothed with teeth (40) and which has at least one partial region (50) formed with a first material and at least one edge region formed additively with a second material, in which the second material has a greater hardness than the first material, **characterized in that** at least one further material is located between the first and second materials and the hardness decreases stepwise along a section leading from an edge to the partial region.

2. Transmission element according to Claim 1, in which the difference in the Vickers hardness of the second material and the first material is at least 100, preferably at least 200, ideally at least 400, degrees of hardness, and in particular the second material has a Vickers hardness of at least 500, preferably at least 600, preferably at least 780 HV, and/or the first material has a Vickers hardness of at most 400 HV, preferably at most 350 HV.

3. Transmission element according to either of the preceding claims, in which at least one or more, preferably all, of the teeth (40) has or have the edge region formed additively with the second material.

4. Transmission element according to one of the preceding claims, in which, in addition, the partial region (50) is formed additively or the partial region is formed by means of primary forming, preferably casting, forming, preferably forging, subtractively, in particular by machining.

5. Transmission element according to one of the preceding claims, in which the first material has a higher ductility than the second material or the second material has greater internal compressive stresses than the first material.

6. Transmission element according to one of the preceding claims, which is or has a gearwheel or a rack.

7. Transmission element according to one of the preceding claims, wherein the at least one further material, between the first and second materials, is formed additively.

8. Transmission element according to one of the preceding claims, in which the first material is formed with or from case-hardened steel and/or nickel-based alloy.

9. Transmission element according to one of the preceding claims, in which the second material is formed with or from hard metal, preferably tungsten carbide, and/or a nickel-based alloy which preferably has long-term thermal stability at at least 250 degrees Celsius.

10. Transmission element according to one of the preceding claims, in which at least the second material is formed by means of laser deposition welding, in particular laser wire deposition welding or laser powder deposition welding, or thermal spraying or cold gas spraying or arc deposition welding or by means of a powder bed process, in particular laser beam melting or selective laser melting or electron beam melting.

11. Method for producing a transmission element according to one of the preceding claims, in which at least the second material is formed by means of laser deposition welding, in particular laser wire deposition welding, or thermal spraying or arc deposition welding or a powder bed process or selective laser melting.

12. Transmission having at least one transmission element according to one of the preceding Claims 1 to 10.

13. Machine, in particular an electric machine (20), preferably a generator and/or motor and/or electric motor, having a transmission according to Claim 12.

14. Turbine, in particular a wind turbine (30) or gas turbine or aircraft gas turbine, having a transmission according to Claim 12 and/or an electric machine according to Claim 13.

## Revendications

1. Élément de transmission (10) qui est muni de dents (40) et qui comporte au moins une zone partielle (50) formée d'une première matière et au moins une zone de bord formée de manière additive d'une deuxième matière, la deuxième matière ayant une dureté supérieure à celle de la première matière, **caractérisé en ce qu'**au moins une autre matière est située entre la première matière et la deuxième matière et **en ce que** la dureté diminue de manière échelonnée le long d'une portion allant d'un bord à la zone partielle.

2. Élément de transmission selon la revendication 1, dans lequel la différence de dureté Vickers entre la deuxième matière et la première matière est d'au moins 100, de préférence d'au moins 200, idéalement d'au moins 400, degrés de dureté et en particulier la deuxième matière ayant une dureté Vickers d'au moins 500, de préférence d'au moins 600, de préférence d'au moins 780 HV, et/ou la première matière ayant une dureté Vickers d'au plus 400 HV, de préférence d'au plus 350 HV.

3. Élément de transmission selon l'une des revendications précédentes, dans lequel au moins une ou plusieurs dents (40), de préférence toutes les dents, comportent la région de bord formée de manière additive de la deuxième matière.

4. Élément de transmission selon l'une des revendications précédentes, dans lequel la zone partielle (50) est également formée de manière additive ou la zone partielle est formée par façonnage primitif, de préférence fonderie, formage, de préférence forgeage, de manière soustractive, notamment par usinage.

5. Élément de transmission selon l'une des revendications précédentes, dans lequel la première matière présente une ductilité supérieure à celle de la deuxième matière ou la deuxième matière présente des contraintes de compression résiduelles plus importantes que la premier matière.

6. Élément de transmission selon l'une des revendications précédentes, qui est ou comporte une roue dentée ou une crémaillère.

7. Élément de transmission selon l'une des revendications précédentes, l'au moins une autre matière étant formée de manière additive entre la première matière et la deuxième matière.

8. Élément de transmission selon l'une des revendications précédentes, dans lequel la première matière est formée d'un ou à partir d'un acier cémenté et/ou d'un alliage à base de nickel.

9. Élément de transmission selon l'une des revendications précédentes, dans lequel la deuxième matière est formée d'un ou à partir d'un métal dur, de préférence du carbure de tungstène et/ou d'un alliage à base de nickel, de préférence thermiquement stable à long terme à au moins 250 degrés Celsius.

10. Élément de transmission selon l'une des revendications précédentes, au moins la deuxième matière étant formée par soudage laser par apport de matière, en particulier par soudage laser avec apport de fil métallique ou par soudage laser avec apport de poudre, ou par projection thermique ou projection de gaz froid ou par soudage à arc avec apport de matière ou par un procédé à lit de poudre, notamment par fusion à faisceau laser ou fusion sélective à laser ou fusion à faisceau d'électrons.

11. Procédé de fabrication d'un élément de transmission selon l'une des revendications précédentes, dans lequel au moins la deuxième matière est formée par soudage laser avec apport de matière, en particulier par soudage laser avec apport de fil métallique, ou par projection thermique ou par soudage à l'arc avec apport de matière ou par un procédé à lit de poudre ou par fusion sélective à laser.

12. Transmission comprenant au moins un élément de transmission selon l'une des revendications précédentes 1 à 10.

13. Machine, notamment machine électrique (20), de préférence générateur et/ou moteur et/ou moteur électrique, comprenant une transmission selon la revendication 12.

14. Turbine, notamment éolienne (30) ou turbine à gaz ou turbine à gaz d'aéronef, comprenant une transmission selon la revendication 12 et/ou une machine électrique selon la revendication 13.
